# EUROPEAN PATENT SPECIFICATION

(11) **EP 0 421 359 B1**
(45) Date of publication and mention of the grant of the patent: **14.12.1994**
(21) Application number: 90118887.0
(22) Date of filing: 02.10.1990
(51) Int. Cl.: C08L 51/00, C08L 23/02, C08L 53/02

(54) **Blends based on vinyl-aromatic polymers**
Mischungen auf Basis von vinylaromatischen Polymeren
Mélanges à base de polymères vinylaromatiques

(30) Priority: 03.10.1989 IT 4100889
(43) Date of publication of application: 10.04.1991
(73) Proprietor: ENICHEM S.p.A., 20124 Milano (IT)
(72) Inventor: Fasulo, Gian Claudio, Dr., I-46010 San Silvestro di C., Mantova (IT); Ghidoni, Dario, Dr., I-46023 Gonzaga, Mantova (IT); Callaioli, Andrea, Dr., I-46100 Mantova (IT); Licon, Andrea, I-46047 P. to Mantovano, Mantova (IT)
(74) Representative: Weinhold, Peter, Dr.

(56) References cited:
- EP-A- 0 310 051

## Description

The present invention relates to blends based on vinyl-aromatic polymers showing highly satisfactory mechanical characteristics and unchanged rheological properties, even after successive processing operations carried out at temperatures equal to or higher than 200°C, such as for example from 200°C to 250°C.

More particularly, the present invention relates to blends based on vinyl-aromatic polymers suitable for producing shaped articles (bodies) endowed with highly satisfactory physical properties and with which it is possible to recover and reuse the processing scrap material.

As is known, vinyl-aromatic polymers are thermoplastic resins suitable for being transformed, under heating, into shaped bodies by injection or extrusion molding. Such vinyl-aromatic polymers have a fair tenacity, but they are not suitable for use in applications where a higher tenacity associated with good chemical resistance is required.

One way of improving these lacking properties is to provide a blend with other polymers having the missing properties so as to result in a material having the desired combination of properties.

However, this approach has been successful only in a limited number of cases. In fact, generally the blending results in a combination of the worst characteristics of each component, the overall result being a material of such poor properties that is is of no practical or commercial value any more.

The reason for this failure is that not all polymers are compatible with each other and, therefore, do not perfectly adhere to each other. As a result, interfaces form between the components of the blend, which interfaces represent weakness and breaking points.

More particularly, blending of polystyrene, or generally of a vinyl-aromatic polymer or copolymer, either as such or rendered impact resistant by grafting with a rubber, with a polyolefin results in blends showing a heterogeneous structure and mechanical weakness, due to the incompatibility of these two types of polymers.

From EP-A-291,352 it is known that homogeneous polymeric compositions containing a polyolefin and a vinyl-aromatic polymer may be prepared by using, as elastomeric component, a vinyl-aromatic polymer containing small quantities of a vinyl-aromatic monomer-conjugated diene linear block polymer and, as compatibilizing agent for the polyolefin and the vinyl-aromatic polymer, a vinyl-aromatic monomer-conjugated diene star-shaped block copolymer.

Particularly, said document describes a polymer blend comprising:
- from 40 to 98% by weight of a vinyl-aromatic polymer containing, as dispersed phase and elastomeric component, from 0.5 to 5% by weight of a vinyl-aromatic monomer-conjugated diene linear block copolymer;
- from 1 to 54% by weight of a polyolefin; and
- from 1 to 20% by weight of a vinyl-aromatic monomer-conjugated diene star-shaped block copolymer.

The above blends are homogeneous and suitable for being transformed into shaped bodies by extrusion, injection molding and/or thermoforming. They show, however, some drawbacks which limit the use thereof in such processes. The main drawback is that the processing scrap material cannot be reused owing to a drastic decay of the mechanical properties of the blend, particularly the resilience and the melt fluidity. This undesired effect generally involves a waste of the processing scraps, the amount of which may be up to 50 to 60% of the virgin product.

It has now been found that the above drawbacks may be overcome by appropriately regulating the amount of diene rubber in the vinyl-aromatic monomer-conjugated diene star-shaped block copolymer used as compatibilizing agent.

Thus, the subject matter of the present invention is a thermo-plastic polymer composition, comprising:
(a) from 10 to 90% by weight of vinyl-aromatic polymer (A) containing, as elastomeric component, from 0.5 to 5% by weight of vinyl-aromatic monomer-conjugated diene linear block copolymer and from 5 to 15% of diene rubber;
(b) from 5 to 50% by weight of polyolefin (B); and
(c) from 5 to 40% by weight of vinyl-aromatic monomer-conjugated diene radial, star-shaped block copolymer (C), having a diene content of from 5 to 35% by weight;

the sum of components (A), (B) and (C) being equal to 100%.

Preferably, the polymeric composition of the present invention comprises:
(a) from 60 to 80% by weight of vinyl-aromatic polymer (A);
(b) from 10 to 30% by weight of polyolefin (B); and
(c) from 5 to 20% by weight of vinyl-aromatic monomer-conjugated diene radial, star-shaped block copolymer (C);
the sum of components (A), (B) and (C) being equal to 100%.

The vinyl aromatic polymer (A) may be prepared by carrying out the polymerisation of vinyl-aromatic monomers having the general formula (I): 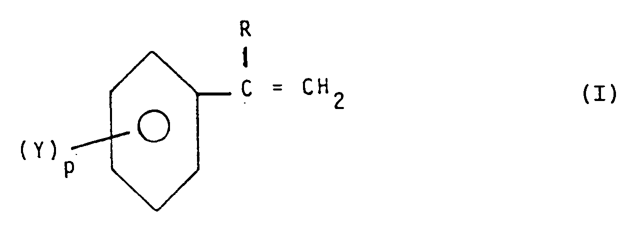
wherein R represents hydrogen or an alkyl radical having from 1 to 4 carbon atoms (e.g. methyl and ethyl); p is zero or an integer of from 1 to 5 (preferably 1 to 3), and Y represents a halogen atom (e.g., F, Cl, Br and I) or an alkyl radical having from 1 to 4 carbon atoms (e.g. methyl and ethyl), in the presence of a diene rubber and a vinyl-aromatic monomer-conjugated diene linear block copolymer, in the amounts given above, optionally by using conventional radical generating catalysts.

Examples of vinyl- aromatic compounds having the above general formula (I) are styrene; methyl-styrene; mono-, di-, tri-, tetra- and penta-chlorostyrene and the corresponding α-methylstyrenes; styrenes alkylated in the nucleus and the corresponding α-methyl-styrenes such as ortho- and para-methylstyrene, ortho- and para-ethyl-styrene; ortho- and para-methyl-α-methyl-styrene, etc. These monomers may be used either alone or in combination with each other or with other copolymerizable co-monomers such as, for instance, maleic anhydride, acrylonitrile, methacrylonitrile and C₁-C₄ alkyl esters of acrylic or methacrylic acid.

The content of diene rubber which may, e.g., be selected from polybutadiene (e.g. high or medium cis- and low viscosity polybutadiene), poly-isoprene, copolymers of butadiene and/or isoprene with styrene or with other monomers, preferably ranges from 7 to 12% by weight.

The content of vinyl-aromatic monomer-conjugated diene linear block copolymer preferably ranges from 2 to 5% by weight. Such copolymers are per se well known in the art and available on the market.

Preferably these linear block copolymers contain from 20 to 60% by weight of recurring units derived from vinyl-aromatic monomer and from 80 to 40% by weight of recurring units derived from conjugated diene, and are of the type
B/S and S - (B/S)
wherein S represents a polymer block based on the vinyl-aromatic monomer and B/S represents a block of copolymers of the vinyl-aromatic monomer and the conjugated diene of the "random" and/or "tapered" type.

These linear block copolymers may be prepared, e.g., according to the method disclosed in US-A-3,149,182.

It is preferred to first polymerize the vinyl-aromatic monomer by anionic polymerization in an inert solvent and in the presence of a lithium-containing organo-metallic catalyst (initiator), and to then add the conjugated diene so as to form a polymeric chain of conjugated diene linked to the already formed polymeric chain of vinyl-aromatic monomers.

Generally, the preparation of the block copolymers is carried out in an inert hydrocarbon solvent such as isobutane, pentane, hexane, cyclohexane, benzene, toluene, xylene, and the like.

The polymerization should be carried out in the absence of air, moisture or other impurities which, as is well-known, adversely affect the anionic catalytic system. The polymerization temperature may be kept within the range of from 0 to 120°C, and preferably of from 40 to 80°C.

As initiator the generally used lithium alkyl, cycloalkyl or aryl compounds may be used, such as, for instance, methyl-lithium, n-butyl-lithium, sec.-butyl-lithium, cyclohexyl-lithium, phenyl-lithium, p-tolyl-lithium and naphthyl-lithium, in a quantity generally ranging from 0.2 to 20 millimols per mole of monomer.

The polymerization is terminated by adding a chain stopper such as alcohol, water or oxygen to the polymerization system.

The molecular weight of the block polymer may vary within a wide range, although an average molecular weight lower than 100,000 is preferred.

The properties, structure and characteristics of these block copolymers are reported by Holden in "Block and Graft Copolymerization", Chapter 6, pages 133-191.

Linear block polymers of this type are available on the market, for example as "Stereon® 840" (The Firestone Co. Akron, Ohio), or as S-B/S block copolymer sold by Shell Chemical Company under the trade names "Kraton® 2103", "Kraton® 2104", "Kraton ^{R} 2113", etc.

The preparation of the vinyl-aromatic polymer (A) may be carried out according to any known method, e.g., suspension, bulk-suspension or continuous bulk polymerization processes.

A preferred method of preparation comprises the pre-polymerization of the vinyl-aromatic monomer in the presence of a conventional free radical catalyst, a diene rubber and the above bock copolymer in a first reactor up to a conversion lower than 50% by weight of the introduced monomer.

Then, the polymerization is continued in one or more subsequent reactors until the polymerization of the monomer is substantially complete.

The thus-obtained polymer may then be devolatilized and granulated.

The polyolefin (B) is preferably polyethylene, e.g., linear low density polyethylene (LLDPE), medium density or high density polyethylene.

Other polyolefins such as polypropylene, polybutene, polymethylpentene, as well as copolymers of two or more α-olefins (e.g. ethylene-propylene copolymers), and copolymers of an α-olefin with an ethylenically unsaturated monomer different from an α-olefin such as, for example, ethylene vinyl acetate (EVA) copolymers, may also be used.

The vinyl-aromatic monomer-conjugated diene star-shaped block copolymer (C) used as a compatibilizing agent in the composition of the present invention is also of a known type and available on the market. Preferably said star-shaped block copolymer is of one or more of the following types:

(II) (S-B)ₖ-X

(III) (S₁-B₁→S₂)ₙ-X-(S₂←B₁)ₘ

(IV) (S₃-S₄-B₂→S₅)ₙ-X-(S₅←B₂-S₄)ₘ

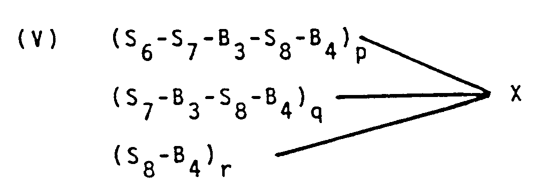

wherein S, S₁, S₂, S₃, S₄, S₅, S₆, S₇ and S₈ represent non-elastomeric polymer blocks of a vinyl-aromatic monomer having the above formula (I), the polymer blocks S in polymer (II) have a unimodal or polymodal, preferably bimodal, molecular weight distribution and the polymer blocks S₁ to S₈ polymers (III), (IV) and (V) each have a unimodal molecular weight distribution; B, B₁, B₂, B₃ and B₄ are elastomeric polymer blocks based on conjugated diene; X is a radical of a polyfunctional coupling agent by means of which the copolymer blocks forming the branches are chemically coupled to one another; k is an integer of at least 3, generally of from 3 to 10 and preferably 3 or 4; m and n are integers, m being greater than n, the sum of m and n being at least 3, generally from 3 to 10 and preferably 3 or 4; and p, q and r are integers the sum of which is at least 3 and preferably greater than 3.

The symbol → in formulae (III) and (IV) means that the transition between the polymer blocks is gradual rather than distinct.

These radial, star-shaped block copolymers (C) are known in the literature. Thus, the polymers of formula (II) are disclosed in DE-A-1,959,922 while US-A-4,086,298 and 4,167,545 disclose the polymers of formulae (III) and (IV) and EP-A-153727 those of formula (V).

Copolymer (C) may be used alone or in combination with polystyrene, as described in GB-A-1,570,404.

The monovinyl-aromatic monomer particularly suitable for the preparation of the block copolymers (C) is styrene; alkyl-substituted styrenes showing the same copolymerization properties such as, for instance, methyl-styrenes, ethyl-styrenes, t.-butyl-styrenes, etc., may, however, also be used.

Conjugated dienes useful for preparing the block copolymers (C) are those having from 4 to 8 carbon atoms such as, for instance, 1,3-butadiene, isoprene, 2,3-dimethyl-1,3-butadiene, piperylene, and mixtures thereof.

In these star-shaped copolymers (C), the non-elastomeric polymer block is preferably polystyrene having an average molecular weight of from 5,000 to 250,000. The elastomeric polymer block is preferably polybutadiene having an average molecular weight of from 5,000 to 50,000 or a butadiene copolymer containing less than 30% and preferably less than 20% by weight of vinyl-aromatic monomer, such as styrene, the monomer distribution being substantially statistical.

The transition between the segments B₁ → S₂ in formula (III) and B₂ → S₅ in formula (IV) is gradual in the sense that the proportion of the vinyl-aromatic monomer in the dienic polymer increases progressively in the direction of the non-elastomeric polymer block, while the proportion of the conjugated diene decreases progressively.

The average molecular weight of the blocks B₁ → S₂ and B₂ → S₅ preferably ranges from 10,000 to 100,000.

The block copolymers (C) are generally prepared by first forming the linear block copolymer having active lithium atoms at one end of the chain, using the above method.

These linear and active polymeric chains are then coupled by the addition of a polyfunctional coupling agent having at least three reactive sites capable of reacting with the lithium-carbon bond, so as to couple the carbon chain at the functional group.

The coupling agents suitable for coupling the living lithium-terminated polymers are known and disclosed, for example, in GB-A-985,614.

Typical examples of polyfunctional coupling agents are the polyepoxides such as, for instance, epoxidized polybutadiene, epoxidized soybean oil, epoxidized linseed oil, polyesters such as diethyl adipate; polyhalides such as silicon tetrachloride; polyisocyanates such as 1,2,4-benzene-triisocyanate; polyimines; polyaldehydes; polyketones such as 1,3,6-hexanetrione; polyanhydrides such as pyromellitic dianhydride; halides of polyacids, such as the chloride of mellitic acid, etc. Polyvinylaromatic compounds such as divinyl-benzene may also be used as coupling agents, as described in US-A-3,280,084. The divinyl-benzene polymerizes to form polyfunctional coupling agents in situ.

The coupling must be followed by a termination, generally achieved by addition of methanol, water and carbon dioxide, acids, etc.

The block copolymers (C) are available on the market, for example under the trade-names "STYROLUX®" (BASF AG) and "K-RESIN®" (PHILLIPS PETROLEUM).

The blend of the present invention may be prepared by first carrying out a blending of the components at a low temperature, in any known type of mixer. Then, the blend may be extruded in a single-screw or twin-screw extruder at a temperature preferably ranging from 150 to 250°C.

The compositions may contain a small amount, generally from 0.1 to 3% by weight, of stabilizing agent and/or other additives, intimately mixed therewith.

Plasticizers, lubricants, anti-flame agents, blowing agents, anti-static agents, dyestuffs, pigments and foaming agents (to provide lighter articles and lighter semi-finished products) may be added during the mixing step of the components, preferably in amounts of from 0.1 to 10% by weight.

The blends of the present invention may easily be processed and show a combination of properties which, on the whole, is significantly better than those of the separate components. For this reason, the blends of the present invention may be used for the production of materials endowed with highly satisfactory mechanical and rheological properties combined with good chemical resistance.

Therefore, said blends are useful in the field of electric appliances, electronics, and generally in the field of technical materials, in the form of films, sheets, tapes, bands, rods, boxes, cups, containers, etc.

The present blends may also be used to produce foamed articles by techniques per se known in the art.

A further advantage of the blends of the present invention is that all their mechanical and rheological properties remain substantially unchanged even after repeated processing operations at temperatures equal to or higher than 200°C. Due to these properties, the processing scrap material may be recovered and may be reused in the processing cycle and retreated as virgin material.

Furthermore, the blends of the present invention have improved properties of fluidity, rigidity and thermo-resistance, as compared to the blends disclosed in EP-A-291,352.

The following non-limiting examples are given to illustrate the present invention.

In said examples all parts and percentages are by weight, unless otherwise indicated.

### EXAMPLE 1 (Comparison)

In a rotating drum blender there were blended, at room temperature:
- 75 parts of an impact-resistant styrene polymer (A) containg, dispersed in the polymeric matrix, 7.75% of a polybutadiene rubber and 3% of an S/B linear block polymer containing 25% of styrene and 75% of butadiene and having an average molecular weight of 75,000:
- 15 parts of a linear low density polyethylene (LLDPE) (B) having a density of 0.926 g/cm³ and a melt flow index (M.F.I.) of 0.7 g/10 min.; and
- 10 parts by weight of a radial block copolymer of structure (II), comprising 70% of butadiene and 30% of styrene, containing silicon as coupling radical, each polymeric unit having an average moelcular weight of 40,000.

The thus-obtained blend was extruded in a single-screw BANDERA® TR 45 extruder having a diameter of 45 mm.

The temperature profile of the extruder between the hopper and the extrusion head was 150°C, 180°C, 190°C, 215°C.

The granules of the first extrusion were then re-extruded in the same single-screw BANDERA® TR 45 extruder at a temperature of 240°C and with a residence time in the extruder of 55 seconds.

The resilience and rheological properties of the obtained samples were determined after two, four and six extrusion operations carried out in the same extruder and under the same processing conditions as described above.

For the rheological properties, the M.F.I. was determined according to ASTM D 1238, at 220°C and 10 kg; and the notched IZOD resilience was determined at 23°C, according to ASTM D 256, on test pieces having a thickness of 12.7 mm, obtained by injection molding at a temperature of 190°C on a NEGRI & BOSSI V 17 - 110 FA injection molding process.

The measured properties are listed in the following Table 1.

### EXAMPLE 2

By operating under the same processing conditions as in example 1, the following blend was prepared:
- 75 parts of the impact-resistant styrene polymer (A) of example 1;
- 15 parts of the linear low density polyethylene (LLDPE) (B) of example 1; and
- 10 parts of a radial block copolymer (C) having the structure (II), comprising 35% of butadiene and 65% of styrene, containing silicon as coupling radical, each polymeric unit having an average molecular weight of 40,000.

The rheological and IZOD resilience properties are listed in the following Table 1.

**TABLE 1**

| NUMBER OF EXTRUSIONS | COMPARATIVE EXAMPLE No. 1 | | EXAMPLE No. 2 | |
|---|---|---|---|---|
| | IZOD (J/m) | M.F.I. (g/10′) | IZOD (J/m) | M.F.I. (g/10′) |
| 1 | 280 | 30 | 300 | 40 |
| 2 | 220 | 18 | 260 | 38 |
| 4 | 140 | 25 | 230 | 36 |
| 6 | 105 | 30 | 210 | 38 |

### EXAMPLE 3

By operating under the process conditions of example 1, the following blend was prepared:
- 75 parts of impact-resistant styrene polymer (A) of example 1;
- 15 parts of linear low density polyethylene (LLDPE) (B) of example 1, and
- 10 parts of a radial block copolymer (C) having the structure (IV), comprising 20 - 21% of butadiene and 79 - 80% of styrene and containing silicon as coupling radical.

In order to determine the properties, the granules, obtained by extrusion in a BANDERA® TR 45 extruder, were injection-molded at a temperature of 190°C on a NEGRI-BOSSI-17-110 FA injection-molding press in order to obtain test pieces having sizes according to standard specifications.

The properties measured on the thus-obtained test pieces are reported in the following Table 2.

To measure the characteristics of the blends of the present invention, the following methods were used:
a) Thermal properties: The Vicat softening temperature at 5 kg was determined according to ISO 306.
b) Rheological properties: The M.F.I. was determined according to ASTM D.1238, at 220°C and 10 kg.
c) Mechanical properties: Tensile strength and elastic modulus were measured according to ASTM-D 638; IZOD resilience (with notch) at 23°C, was measured according to ASTM-D 256, on test pieces having a thickness of 12.7 mm.

**TABLE 2**

| THERMAL PROPERTIES: VICAT at 5 kg | °C | 88 |
|---|---|---|
| RHEOLOGICAL PROPERTIES: M. F. I. | g/10′ | 42 |

| MECHANICAL PROPERTIES: | | |
|---|---|---|
| · Yield point | N/mm² | 23 |
| · Ultimate tensile strength | N/mm² | 21 |
| · Elongation at break | % | 65 |
| · Elastic modulus | N/mm² | 1600 |
| · IZOD resilience (with notch) | J/m | 280 |

The first extruded granules then were re-extruded in the same single-screw BANDERA® TR 45 extruder at a temperature of 240°C with a residence time in the extruder of 55 seconds.

The resilience and rheological properties of the obtained samples were determined after two, four and six extrusions through the same extruder and under the same processing conditions.

The obtained results were:

| NUMBER OF EXTRUSIONS | 1 | 2 | 4 | 6 |
|---|---|---|---|---|
| IZOD (J/M) | 280 | 250 | 230 | 210 |
| M.F.I. (g/10′) | 42 | 41 | 40 | 41 |

### EXAMPLE 4

Example 3 was repeated by changing the amount of polymer (A) from 75 to 80 parts by weight and that of polyethylene (B) from 15 to 10 parts by weight.

The resilience and rheological properties of the obtained samples after one, two, four and six extrusions through a BANDERA® TR 45 extruder, under the process conditions of example 3, were:

| NUMBER OF EXTRUSIONS | 1 | 2 | 4 | 6 |
|---|---|---|---|---|
| M.F.I. (g/10′) | 40 | 40 | 39 | 39 |
| IZOD (J/m) | 230 | 210 | 191 | 180 |

## Claims (Claims for the following Contracting State(s): AT, BE, CH, DE, DK, FR, GB, LI, NL, SE)

1. Blends based on vinyl-aromatic polymers, comprising:
(a) from 10 to 90% by weight of vinyl-aromatic polymer (A) containing, as elastomeric component, from 0.5 to 5% by weight of a vinyl-aromatic monomer-conjugated diene linear block copolymer and from 5 to 15% by weight of diene rubber;
(b) from 5 to 50% by weight of polyolefin (B); and
(c) from 5 to 40% by weight of vinyl-aromatic monomer-conjugated diene radial, star-shaped block copolymer (C) having a diene content of from 5 to 35% by weight;
the sum of the above components (A) to (C) being equal to 100%.

2. Blends according to claim 1, comprising:
(a) from 60 to 80% by weight of vinyl-aromatic polymer (A);
(b) from 10 to 30% by weight of polyolefin (B); and
(c) from 5 to 20% by weight of vinyl-aromatic monomer-conjugated diene radial, star-shaped block copolymer (C);
the sum of the above components (A) to (C) being equal to 100%.

3. Blends according to any one of claims 1 and 2, wherein the amount of diene rubber in the vinyl-aromatic polymer (A) ranges from 7 to 12% by weight.

4. Blends according to anyone of the preceding claims, wherein the amount of vinyl-aromatic monomer-conjugated diene linear block copolymer in the vinyl-aromatic polymer (A) ranges from 2 to 5% by weight.

5. Blends according to anyone of the preceding claims, wherein the vinyl-aromatic monomer-conjugated diene linear block copolymer contains from 20 to 60% by weight of units derived from vinyl-aromatic monomer and from 80 to 40% by weight of units derived from conjugated diene.

6. Blends according to anyone of the preceding claims, wherein the linear block copolymer is of the type
B/S and S - (B/S)
wherein S represents polymeric blocks based on vinyl-aromatic monomer and B/S represents blocks of copolymers of the vinyl-aromatic monomer and the conjugated diene of the "random" and/or "tapered" type.

7. Blends according to anyone of the preceding claims, wherein the polyolefin is polyethylene of the linear low density, high density, or medium density type or is selected from polypropylene, copolymers of two or more α-olefins and copolymers of an α-olefin and an ethylenically unsaturated monomer different from an α-olefin.

8. Blends according to anyone of the preceding claims, wherein the star-shaped block copolymer (C) is of one of the following types:
(II) (S-B)ₖ-X
(III) (S₁-B₁→S₂)ₙ-X-(S₂←B₁)ₘ
(IV) (S₃-S₄-B₂→S₅)ₙ-X-(S₅←B₂-S₄)ₘ 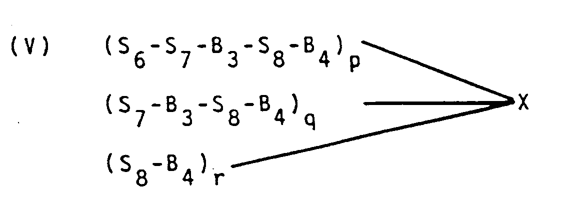
wherein S, S₁, S₂, S₃, S₄, S₅, S₆, S₇ and S₈ are non-elastomeric polymer blocks of a vinyl-aromatic monomer having the above formula (I), the polymer blocks S in polymer (II) have a unimodal or polymodal, preferably bimodal, molecular weight distribution, and the polymeric blocks S₁ to S₈ in polymers (III), (IV) and (V) each have a unimodal molecular weight distribution; B, B₁, B₂, B₃ and B₄ are elastomeric polymer blocks based on conjugated diene; X is a radical of a polyfunctional coupling agent by means of which the copolymer blocks forming the branches are chemically coupled to one another; k is an integer of at least 3, preferably of from 3 to 10 and particularly 3 or 4; m and n are integers, m being greater than n, the sum of m and n being at least 3, preferably from 3 to 10 and particularly 3 or 4; and p, q and r are integers the sum of which is at least 3; and the symbol → in formulae (III) and (IV) means that the transition between the polymer blocks is gradual rather than distinct which means that the proportion of the vinyl aromatic monomer in diene polymer increases progressively in the direction of the non elastomeric polymer block, while the proportion of the conjugated diene decreases progressively.

9. Blends according to claim 8, wherein the non-elastomeric polymer blocks are polystyrene blocks having a molecular weight of from 5,000 to 250,000 and the elastomeric polymer blocks are polybutadiene blocks having a molecular weight of from 5,000 to 50,000 or are copolymer blocks of butadiene which contain less than 30%, and preferably less than 20% by weight of a vinyl-aromatic monomer, such as styrene, the distribution of the monomers being substantially statistical.

10. Blends according to anyone of the preceding claims, wherein the star-shaped block copolymer (C) is used in combination with polystyrene.

## Claims (Claims for the following Contracting State(s): ES)

1. Process for the preparation of the blends based on vinyl-aromatic polymers, caracterized in that:
(a) from 10 to 90% by weight of vinyl-aromatic Polymer (A) containing, as elastomeric component, from 0.5 to 5% by weight of a vinyl-aromatic monomer-conjugated diene linear block copolymer and from 5 to 15% by weight of diene rubber;
(b) from 5 to 50% by weight of polyolefin (B); and
(c) from 5 to 40% by weight of vinyl-aromatic monomer-conjugated diene radial, star-shaped block copolymer (C) having a diene content of from 5 to 35% by weight;
the sum of the above components (A) to (C) being equal to 100% are intimately mixed.

2. Process,according to claim 1, caracterized in that the blends comprise:
(a) from 60 to 80% by weight of vinyl-aromatic polymer (A);
(b) from 10 to 30% by weight of polyolefin (B); and
(c) from 5 to 20% by weight of vinyl-aromatic monomer-conjugated diene radial, star-shaped block copolymer (C);
the sum of the above components (A) to (C) being equal to 100%.

3. Process,according to any one of claims 1 and 2, wherein the amount of diene rubber in the vinyl-aromatic polymer (A) ranges from 7 to 12% by weight.

4. Process, according to anyone of the preceding claims, wherein the amount of vinyl-aromatic monomer-conjugated diene linear block copolymer in the vinyl-aromatic polymer (A) ranges from 2 to 5% by weight.

5. Process, according to anyone of the preceding claims, wherein the vinyl-aromatic monomer-conjugated diene linear block copolymer contains from 20 to 60% by weight of units derived from vinyl-aromatic monomer and from 80 to 40% by weight of units derived from conjugated diene.

6. Process, according to anyone of the preceding claims, wherein the linear block copolymer is of the type
B/S and S - (B/S)
wherein S represents polymeric blocks based on vinyl-aromatic monomer and B/S represents blocks of copolymers of the vinyl-aromatic monomer and the conjugated diene of the "random" and/or "tapered" type.

7. Process, according to anyone of the preceding claims, wherein the polyolefin is polyethylene of the linear low density, high density, or medium density type or is selected from polypropylene, copolymers of two or more α-olefins and copolymers of an α-olefin and an ethylenically unsaturated monomer different from an α-olefin.

8. Process, according to anyone of the preceding claims, wherein the star-shaped block copolymer (C) is of one of the following types:
(II) (S-B)ₖ-X
(III) (S₁-B₁→S₂)ₙ-X-(S₂←B₁)ₘ
(IV) (S₃-S₄-B₂→S₅)ₙ-X-(S₅←B₂-S₄)ₘ 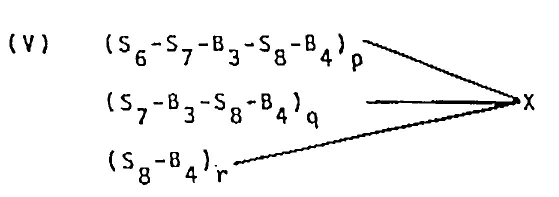
wherein S, S₁, S₂, S₃, S₄, S₅, S₆, S₇ and S₈ are non-elastomeric polymer blocks of a vinyl-aromatic monomer having the above formula (I), the Polymer blocks S in polymer (II) have a unimodal or polymodal, preferably bimodal, molecular weight distribution, and the polymeric blocks S₁ to S₈ in polymers (III), (IV) and (V) each have a unimodal molecular weight distribution; B, B₁, B₂, B₃ and B₄ are elastomeric polymer blocks based on conjugated diene; X is a radical of a polyfunctional coupling agent by means of which the copolymer blocks forming the branches are chemically coupled to one another; k is an integer of at least 3, preferably of from 3 to 10 and particularly 3 or 4; m and n are integers, m being greater than n, the sum of m and n being at least 3, preferably from 3 to 10 and particularly 3 or 4; and p, q and r are integers the sum of which is at least 3; and the symbol → in formulae (III) and (IV) means that the transition between the polymer blocks is gradual rather than distinct which means that the proportion of the vinyl aromatic monomer in diene polymer increases progressively in the direction of the non elastomeric polymer block, while the proportion of the conjugated diene decreases progressively.

9. Process, according to claim 8, wherein the non-elastomeric polymer blocks are polystyrene blocks having a molecular weight of from 5,000 to 250,000 and the elastomeric polymer blocks are polybutadiene blocks having a molecular weight of from 5,000 to 50,000 or are copolymer blocks of butadiene which contain less than 30%, and preferably less than 20% by weight of a vinyl-aromatic monomer, such as styrene, the distribution of the monomers being substantially statistical.

10. Process, according to anyone of the preceding claims, wherein the star-shaped block copolymer (C) is used in combination with polystyrene.

## Patentansprüche (Patentansprüche für folgende(n) Vertragsstaat(en): AT, BE, CH, DE, DK, FR, GB, LI, NL, SE)

1. Mischungen auf der Basis vinylaromatischer Polymere, welche umfassen:
(a) 10 bis 90 Gew.-% vinylaromatisches Polymer (A), das als elastomere Komponente 0.5 bis 5 Gew.-% eines linearen Blockcopolymers aus vinylaromatischem Monomer und konjugiertem Dien und 5 bis 15 Gew.-% eines Dienkautschuks enthält,
(b) 5 bis 50 Gew.-% Polyolefin (B) und
(c) 5 bis 40 Gew.-% radiales, sternförmiges Blockcopolymer (C) aus vinylaromatischem Monomer und konjugiertem Dien mit einem Diengehalt von 5 bis 35 Gew.-%,
wobei die Summe der obigen Komponenten (A) bis (C) gleich 100 % ist.

2. Mischungen gemäß Anspruch 1, welche umfassen:
(a) 60 bis 80 Gew.-% vinylaromatisches Polymer (A),
(b) 10 bis 30 Gew.-% Polyolefin (B) und
(c) 5 bis 20 Gew.-% radiales, sternförmiges Blockcopolymer (C) aus vinylaromatischem Monomer und konjugiertem Dien,
wobei die Summe der obigen Komponenten (A) bis (C) gleich 100 % ist.

3. Mischungen gemäß irgendeinem der Ansprüche 1 und 2, worin die Menge an Dienkautschuk im vinylaromatischen Polymer (A) im Bereich von 7 bis 12 Gew.-% liegt.

4. Mischungen gemäß irgendeinem der vorhergehenden Ansprüche, worin die Menge an linearem Blockcopolymer aus vinylaromatischem Monomer und konjugiertem Dien im vinylaromatischen Polymer (A) im Bereich von 2 bis 5 Gew.-% liegt.

5. Mischungen gemäß irgendeinem der vorhergehenden Ansprüche, worin das lineare Blockcopolymer aus vinylaromatischem Monomer und konjugiertem Dien 20 bis 60 Gew.-% aus vinylaromatischem Monomer abgeleitete Einheiten enthält und 80 bis 40 Gew.-% von konjugiertem Dien abgeleitete Einheiten.

6. Mischungen gemäß irgendeinem der vorhergehenden Ansprüche, worin das lineare Blockcopolymer vom Typ
B/S und S-(B/S)
ist, worin S polymere Blöcke auf der Basis vinylaromatischer Monomere darstellt und B/S Blöcke von Copolymeren des vinylaromatischen Monomers und des konjugierten Diens des ''random''- und/oder ''tapered''-Typs bezeichnet.

7. Mischungen gemäß irgendeinem der vorhergehenden Ansprüche, worin das Polyolefin Polyethylen vom Typ ''linear low density'', ''high density'' oder ''medium density'' ist oder ausgewählt ist aus Polypropylen, Copolymeren von zwei oder mehr α-Olefinen und Copolymeren eines α-Olefins und eines ethylenisch ungesättigten Monomers, das kein α-Olefin ist.

8. Mischungen gemäß irgendeinem der vorhergehenden Ansprüche, worin das sternförmige Blockcopolymer (C) eines der folgenden Typen ist:
(II) (S-B)ₖ-X
(III) (S₁-B₁→S₂)ₙ-X-(S₂←B₁)ₘ
(IV) (S₃-S₄-B₂→S₅)ₙ -X-(S₅←B₂-S₄)ₘ 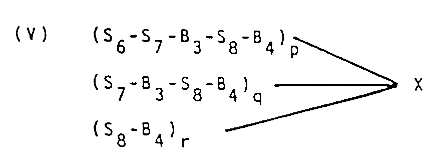
worin S, S₁, S₂, S₃, S₄, S₅, S₆, S₇ und S₈ nicht-elastomere Polymerblöcke eines vinylaromatischen Monomers der obigen Formel (I) sind, die Polymerblöcke S im Polymer (II) eine unimodale oder polymodale, vorzugsweise bimodale, Molekulargewichtsverteilung haben und die polymeren Blöcke S₁ bis S₈ in den Polymeren (III), (IV) und (V) jeweils eine unimodale Molekulargewichtsverteilung besitzen; B, B₁, B₂, B₃ und B₄ elastomere Polymerblöcke auf der Basis konjugierter Diene sind; X ein Radikal eines polyfunktionellen Kupplungsmittels ist, durch das die die Verzweigungen bildenden Copolymerblöcke chemisch aneinander gekoppelt werden; k eine Zahl von mindestens 3 ist, vorzugsweise 3 bis 10 und insbesondere 3 oder 4; m und n Zahlen sind, wobei m größer als n ist und die Summe von m und n mindestens 3 beträgt, vorzugsweise 3 bis 10 und insbesondere 3 oder 4; und worin p, q und r Zahlen sind, deren Summe mindestens 3 beträgt; und worin das Symbol → in den Formeln (III) und (IV) bedeutet, daß der Übergang zwischen den Polymerblöcken graduell ist und nicht scharf, was bedeutet, daß der Anteil an vinylaromatischem Monomer im Dienpolymer in Richtung auf den nicht-elastomeren Polymerblock fortschreitend zunimmt, während der Anteil an konjugiertem Dien fortschreitend abnimmt.

9. Mischungen gemäß Anspruch 8, worin die nicht-elastomeren Polymerblöcke Polystyrolblöcke mit einem Molekulargewicht von 5000 bis 250000 sind und die elastomeren Polymerblöcke Polybutadienblöcke mit einem Molekulargewicht von 5000 bis 50000 sind oder Butadien-Copolymerblöcke, die weniger als 30 Gew.-% und vorzugsweise weniger als 20 Gew.-% eines vinylaromatischen Monomers, wie Styrol, enthalten, wobei die Verteilung des Monomers im wesentlichen statistisch ist.

10. Mischungen gemäß irgendeinem der vorhergehenden Ansprüche, worin das sternförmige Blockcopolymer (C) in Kombination mit Polystyrol verwendet wird.

## Patentansprüche (Patentansprüche für folgende(n) Vertragsstaat(en): ES)

1. Verfahren zur Herstellung von Mischungen auf der Basis vinylaromatischer Polymere, dadurch gekennzeichnet,daß:
(a) 10 bis 90 Gew.-% vinylaromatisches Polymer (A), das als elastomere Komponente 0.5 bis 5 Gew.-% eines linearen Blockcopolymers aus vinylaromatischem Monomer und konjugiertem Dien und 5 bis 15 Gew.-% eines Dienkautschuks enthält,
(b) 5 bis 50 Gew.-% Polyolefin (B) und
(c) 5 bis 40 Gew.-% radiales, sternförmiges Blockcopolymer (C) aus vinylaromatischem Monomer und konjugiertem Dien mit einem Diengehalt von 5 bis 35 Gew.-%,
wobei die Summe der obigen Komponenten (A) bis (C) gleich 100 % ist, gründlich miteinander vermischt werden.

2. Verfahren gemäß Anspruch 1, dadurch gekennzeichnet, daß die Mischungen umfassen:
(a) 60 bis 80 Gew.-% vinylaromatisches Polymer (A),
(b) 10 bis 30 Gew.-% Polyolefin (B) und
(c) 5 bis 20 Gew.-% radiales, sternförmiges Blockcopolymer (C) aus vinylaromatischem Monomer und konjugiertem Dien,
wobei die Summe der obigen Komponenten (A) bis (C) gleich 100 % ist.

3. Verfahren gemäß irgendeinem der Ansprüche 1 und 2, worin die Menge an Dienkautschuk im vinylaromatischen Polymer (A) im Bereich von 7 bis 12 Gew.-% liegt.

4. Verfahren gemäß irgendeinem der vorhergehenden Ansprüche, worin die Menge an linearem Blockcopolymer aus vinylaromatischem Monomer und konjugiertem Dien im vinylaromatischen Polymer (A) im Bereich von 2 bis 5 Gew.-% liegt.

5. Verfahren gemäß irgendeinem der vorhergehenden Ansprüche, worin das lineare Blockcopolymer aus vinylaromatischem Monomer und konjugiertem Dien 20 bis 60 Gew.-% aus vinylaromatischem Monomer abgeleitete Einheiten enthält und 80 bis 40 Gew.-% von konjugiertem Dien abgeleitete Einheiten.

6. Verfahren gemäß irgendeinem der vorhergehenden Ansprüche, worin das lineare Blockcopolymer vom Typ
B/S und S-(B/S)
ist, worin S polymere Blöcke auf der Basis vinylaromatischer Monomere darstellt und B/S Blöcke von Copolymeren des vinylaromatischen Monomers und des konjugierten Diens des ''random''- und/oder ''tapered''-Typs bezeichnet.

7. Verfahren gemäß irgendeinem der vorhergehenden Ansprüche, worin das Polyolefin Polyethylen vom Typ ''linear low density'', "high density'' oder ''medium density" ist oder ausgewählt ist aus Polypropylen, Copolymeren von zwei oder mehr α-Olefinen und Copolymeren eines α-Olefins und eines ethylenisch ungesättigten Monomers, das kein α-Olefin ist.

8. Verfahren gemäß irgendeinem der vorhergehenden Ansprüche, worin das sternförmige Blockcopolymer (C) eines der folgenden Typen ist:
(II) (S-B)ₖ-X
(III) (S₁-B₁→S₂)ₙ-X-(S₂←B₁)ₘ
(IV) (S₃-S₄-B₂→S₅)ₙ-X- (S₅←B₂-S₄)ₘ 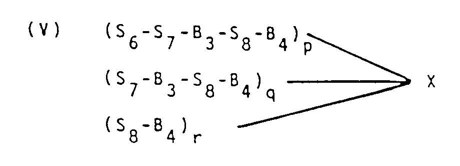
worin S, S₁, S₂, S₃, S₄, S₅, S₆, S₇ und S₈ nicht-elastomere Polymerblöcke eines vinylaromatischen Monomers der obigen Formel (I) sind, die Polymerblöcke S im Polymer (II) eine unimodale oder polymodale, vorzugsweise bimodale, Molekulargewichtsverteilung haben und die polymeren Blöcke S₁ bis S₈ in den Polymeren (III), (IV) und (V) jeweils eine unimodale Molekulargewichtsverteilung besitzen; B, B₁, B₂, B₃ und B₄ elastomere Polymerblöcke auf der Basis konjugierter Diene sind; X ein Radikal eines polyfunktionellen Kupplungsmittels ist, durch das die die Verzweigungen bildenden Copolymerblöcke chemisch aneinander gekoppelt werden; k eine Zahl von mindestens 3 ist, vorzugsweise 3 bis 10 und insbesondere 3 oder 4; m und n Zahlen sind, wobei m größer als n ist und die Summe von m und n mindestens 3 beträgt, vorzugsweise 3 bis 10 und insbesondere 3 oder 4; und worin p, q und r Zahlen sind, deren Summe mindestens 3 beträgt; und worin das Symbol → in den Formeln (III) und (IV) bedeutet, daß der Übergang zwischen den Polymerblöcken graduell ist und nicht scharf, was bedeutet, daß der Anteil an vinylaromatischem Monomer im Dienpolymer in Richtung auf den nicht-elastomeren Polymerblock fortschreitend zunimmt, während der Anteil an konjugiertem Dien fortschreitend abnimmt.

9. Verfahren gemäß Anspruch 8, worin die nicht-elastomeren Polymerblöcke Polystyrolblöcke mit einem Molekulargewicht von 5000 bis 250000 sind und die elastomeren Polyperblöcke Polybutadienblöcke mit einem Molekulargewicht von 5000 bis 50000 sind oder Butadien-Copolymerblöcke, die weniger als 30 Gew.-% und vorzugsweise weniger als 20 Gew.-% eines vinylaromatischen Monomers, wie Styrol, enthalten, wobei die Verteilung des Monomers im wesentlichen statistisch ist.

10. Verfahren gemäß irgendeinem der vorhergehenden Ansprüche, worin das sternförmige Blockcopolymer (C) in Kombination mit Polystyrol verwendet wird.

## Revendications (Revendications pour l'(les) Etat(s) contractant(s) suivant(s): AT, BE, CH, DE, DK, FR, GB, LI, NL, SE)

1. Mélanges à base de polymères vinylaromatiques comprenant:
a) de 10 à 90% en poids de polymère vinylaromatique (A) contenant, comme composant élastomère, de 0,5 à 5% en poids d'un copolymère bloc linéaire à base de monomères vinylaromatiques et de diènes conjugués et de 5 à 15% en poids de caoutchouc à base de diène;
b) de 5 à 50% en poids de polyoléfine (B) et;
c) de 5 à 40% en poids de copolymère bloc radial en forme d'étoile (C) formé de monomères vinylaromatiques et de diènes conjugués, ayant une teneur en diène de 5 à 35% en poids;
la somme des composants ci-dessus (A) à (C) étant égale à 100%.

2. Mélanges selon la revendication 1, comprenant:
a) de 60 à 80% en poids de polymère vinylaromatique (A);
b) de 10 à 30% en poids de polyoléfine (B); et
c) de 5 à 20% en poids de copolymère bloc (C) radial en forme
d'étoile formé de monomères vinylaromatiques et de diènes conjugués; la somme des composants (A) à (C) ci-dessus étant égale à 100%.

3. Mélanges suivant l'une quelconque des revendications 1 et 2, dans lesquels la quantité de caoutchouc à base de diène dans le polymère vinylaromatique (A) est comprise dans la gamme de 7 à 12% en poids.

4. Mélanges suivant l'une quelconque des revendications précédentes, dans lesquels la quantité de copolymère bloc linéaire formé de monomères vinylaromatiques et de diènes conjugués dans le polymère vinylaromatique (A) est comprise dans une gamme de 2 à 5% en poids.

5. Mélanges suivant l'une quelconque des revendications précédentes, dans lesquels le copolymère bloc linéaire formé de monomères vinylaromatiques et de diènes conjugués contient de 20 à 60% en poids d'unités dérivées du monomère vinylaromatique et de 80 à 40% en poids d'unités dérivées du diène conjugué.

6. Mélanges suivant l'une quelconque des revendications précédentes, dans lesquels le copolymère bloc linéaire est du type B/S et S - (B/S) où S représente des blocs de polymères à base de monomères vinylaromatiques et B/S représente des blocs de copolymères à base du monomère vinylaromatique et du diène conjugué du type "statistique" et/ou "effilé".

7. Mélanges suivant L'une quelconque des revendications précédentes, dans lesquels la polyoléfine est un polyéthylène du type Linéaire, basse densité, haute densité ou moyenne densité, ou est choisie dans le groupe comprenant le polypropylène, les copolymères de deux ou plusieurs alpha-oléfines et les copolymères d'une alpha-oléfine et d'un monomère éthyléniquement insaturé différent d'une α-oléfine.

8. Mélanges suivant l'une quelconque des revendications précédentes, dans lesquels le copolymère bloc (C) en forme d'étoile est de l'un des types suivants:
(II) (S-B)ₖ-X
(III) (S₁-B₁ → S₂)ₙ-X-(S₂ ←B₁)ₘ
(IV) (S₃-S₄-B₂→ S₅)ₙ-X-(S₅ ←B₂-S₄)ₘ 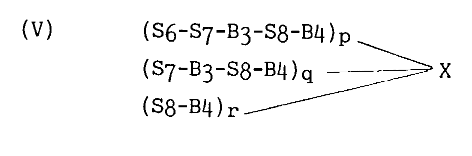
où
S, S₁, S₂, S₃, S₄, S₅, S₇ et S₈ sont des blocs de polymères non élastomères d'un monomère vinylaromatique ayant la formule (I), les blocs de polymère S dans le polymère (II) ont une distribution de poids moléculaires unimodale ou polymodale, de préférence bimodale et les blocs de polymères S₁ à S₈ dans les polymères (III). (IV) et (V) ont chacun une distribution de poids moléculaires unimodale;
B, B₁, B₂, B₃ et B₄ sont des blocs de polymères élastomères à base de diènes conjugués;
X est un radical d'un agent de couplage polyfonctionnel au moyen duquel les blocs de copolymères formant les ramifications sont chimiquement couplés les uns aux autres;
K est un entier d'au moins 3, de préférence de 3 à 10, et en particulier 3 ou 4;
m et n sont des entiers, m étant supérieur à n, la somme de m et n étant d'au moins 3, de préférence de 3 à 10, et en particulier de 3 ou 4;
p, q et r sont des entiers dont la somme est d'au moins 3; et
le symbole flèche (→) dans les formules (III) et (IV) signifie que la transition entre les blocs de polymères est graduelle plutôt que distincte, ce qui signifie que la proportion du monomère vinylaromatique dans le polymère à base de diène augmente progressivement dans la direction du bloc de polymère non-élastomère, tandis que la proportion de diène conjugué diminue progressivement.

9. Mélanges suivant la revendication 8, dans lesquels les blocs de polymères non-élastomères sont des blocs de polystyrène ayant un poids moléculaire compris entre 5000 et 250 000 et les blocs de polymères élastomères sont des blocs de polybutadiène ayant un poids moléculaire de 5000 à 50 000 ou sont des blocs de copolymères de butadiène qui contiennent moins de 30% et de préférence moins de 20% en poids d'un monomère vinylaromatique, comme le styrène, la distribution des monomères étant pratiquement statistique.

10. Mélanges suivant l'une quelconque des revendications précédentes, dans Lesquels le copolymère bloc (C) en forme d'étoile est utilisé en association avec un polystyrène.

## Revendications (Revendications pour l'(les) Etat(s) contractant(s) suivant(s): ES)

1. Procédé de préparation de mélanges à base de polymères vinylaromatiques, caractérisé en ce que:
a) de 10 à 90% en poids de polymère vinylaromatique (A) contenant, comme composant élastomère, de 0,5 à 5% en poids d'un copolymère bloc linéaire à base de monomères vinylaromatiques et de diènes conjugués et de 5 à 15% en poids de caoutchouc à base de diène;
b) de 5 à 50% en poids de polyoléfine (B) et;
c) de 5 à 40% en poids de copolymère bloc radial en forme d'étoile (C) formé de monomères vinylaromatiques et de diènes conjugués, ayant une teneur en diène de 5 à 35% en poids;
la somme des composants ci-dessus (A) à (C) étant égale à 100% sont intimement mélangés.

2. Procédé selon la revendication 1, caractérisé en ce que le mélange comprend:
a) de 60 à 80% en poids de polymère vinylaromatique (A);
b) de 10 à 30% en poids de polyoléfine (B); et
c) de 5 à 20% en poids de copolymère bloc (C) radial en forme
d'étoile formé de monomères vinylaromatiques et de diènes conjugués; la somme des composants (A) à (C) étant égale à 100%.

3. Procédé suivant l'une quelconque des revendications 1 et 2 , dans lequel la quantité de caoutchouc à base de diène dans le polymère vinylaromatique (A) est comprise dans la gamme de 7 à 12% en poids.

4. Procédé suivant l'une quelconque des revendications précédentes, dans lequel la quantité de copolymère bloc linéaire formé de monomères vinylaromatiques et de diènes conjugués dans le polymère vinylaromatique (A) est comprise dans une gamme de 2 à 5% en poids.

5. Procédé suivant l'une quelconque des revendications précédentes, dans lequel le copolymère bloc linéaire formé de monomères vinylaromatiques et de diènes conjugués contient de 20 à 60% en poids d'unités dérivées du monomère vinylaromatique et de 80 à 40% en poids d'unités dérivées du diène conjugué.

6. Mélanges suivant l'une quelconque des revendications précédentes, dans lequel le copolymère bloc Linéaire est du type B/S et S - (B/S) où S représente des blocs de polymères à base de monomères vinylaromatiques et B/S représente des blocs de copolymères à base du monomère vinylaromatique et du diène conjugué du type "statistique" et/ou "effilé".

7. Procédé suivant l'une quelconque des revendications précédentes, dans lequel la polyoléfine est un polyéthylène du type linéaire, basse densité, haute densité ou moyenne densité, ou est choisie dans le groupe comprenant le polypropylène, les copolymères de deux ou plusieurs alpha-oléfines et les copolymères d'une alpha-oléfine et d'un monomère éthyléniquement insaturé différent d'une α-oléfine.

8. Procédé suivant l'une quelconque des revendications précédentes, dans lequel le copolymère bloc (C) en forme d'étoile est de l'un des types suivants:
(II) (S-B)ₖ-X
(III) (S₁-B₁ → S₂)ₙ-X-(S₂ ←B₁)ₘ
(IV) (S₃-S₄-B₂→ S₅)ₙ-X-(S₅ ←B₂-S₄)ₘ 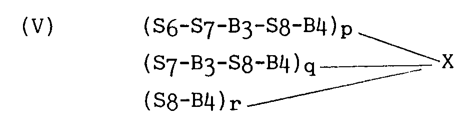
où
S, S₁, S₂, S₃, S₄, S₅, S₇ et S₈ sont des blocs de polymères non élastomères d'un monomère vinylaromatique ayant la formule (I), les blocs de polymère S dans le polymère (II) ont une distribution de poids moléculaires unimodale ou polymodale, de préférence bimodale et les blocs de polymères S₁ à S₈ dans les polymères (III). (IV) et (V) ont chacun une distribution de poids moléculaires unimodale;
B, B₁, B₂, B₃ et B₄ sont des blocs de polymères élastomères à base de diènes conjugués;
X est un radical d'un agent de couplage polyfonctionnel au moyen duquel les blocs de copolymères formant les ramifications sont chimiquement couplés les uns aux autres;
K est un entier d'au moins 3, de préférence de 3 à 10, et en particulier 3 ou 4;
m et n sont des entiers, m étant supérieur à n, la somme de m et n étant d'au moins 3, de préférence de 3 à 10, et en particulier de 3 ou 4;
p, q et r sont des entiers dont la somme est d'au moins 3; et
le symbole flèche (→) dans les formules (III) et (IV) signifie que la transition entre les blocs de polymères est graduelle plutôt que distincte, ce qui signifie que la proportion du monomère vinylaromatique dans le polymère à base de diène augmente progressivement dans la direction du bloc de polymère non-élastomère, tandis que la proportion de diène conjugué diminue progressivement.

9. Procédé suivant la revendication 8, dans lequel les blocs de polymères non-élastomères sont des blocs de polystyrène ayant un poids moléculaire compris entre 5000 et 250 000 et les blocs de polymères élastomères sont des blocs de polybutadiène ayant un poids moléculaire de 5000 à 50 000 ou sont des blocs de copolymères de butadiène qui contiennent moins de 30% et de préférence moins de 20% en poids d'un monomère vinylaromatique, comme le styrène, la distribution des monomères étant pratiquement statistique.

10. Procédé suivant l'une quelconque des revendications précédentes, dans lequel le copolymère bloc (C) en forme d'étoile est utilisé en association avec un polystyrène.
